# EUROPÄISCHE PATENTSCHRIFT

(11) **EP 1 078 608 B1**
(45) Veröffentlichungstag und Bekanntmachung des Hinweises auf die Patenterteilung: **09.03.2005**
(21) Anmeldenummer: 99810776.7
(22) Anmeldetag: 27.08.1999
(51) Int. Cl.: A61C 13/30

(54) **Verankerungselement für die Dentalmedizin**
Dental anchoring element
Elément d'ancrage dentaire

(43) Veröffentlichungstag der Anmeldung: 28.02.2001
(73) Patentinhaber: Harald Nordin SA, 1817 Brent (CH)
(72) Erfinder: Nordin, Harald E., 1822 Chernex (CH)
(74) Vertreter: AMMANN PATENTANWAELTE AG BERN

(56) Entgegenhaltungen:
- FR-A- 2 468 353
- FR-A- 2 626 167
- US-A- 5 816 816

## Beschreibung

Die vorliegende Erfindung bezieht sich auf ein VerankerungsElement wie Wurzelstift oder Zahnwurzelkanalanker gemäss Oberbegriff von Patentanspruch 1.

Wurzelstifte, bzw. Zahnwurzelkanalanker gemäss dem Oberbegriff von Patentanspruch 1 sind aus der FR-A-2 626 167 bekannt, wobei die Stifte stets eine Zentralseele aufweisen und die Fasern darum geflochten sind, so dass sich eine im wesentlichen longitudinale Ausrichtung der Fasern ergibt.

Die US-A-5 816 816 offenbart einen geflochtenen Hohlstrumpf, der in die Bohrung eingeführt und mit Zement ausgegossen wird.

In der FR-A-2 588 181 wird eine Anzahl Stifte offenbart, die aus faserverstärktem Kunststoff bestehen können und wobei verschiedene Herstellungsverfahren sowie verschiedene Möglichkeiten offenbart sind, wie die Fasern angeordnet und im Kunststoff eingebettet sein können.

In der DE-A-38 25 601 sind weitere Zahnwurzelkanalanker offenbart, die aus faserverstärktem Kunststoff bestehen, wobei die Fasern im Verankerungsteil im wesentlichen entlang der Stiftachse ausgerichtet sind und im Retentionskopf eine andere Ausrichtung haben, jedoch jeweils in parallel zueinander liegenden Fasern angeordnet sind.

Es hat sich herausgestellt und Versuche haben dies auch bestätigt, dass die bei einem Zahnwurzelkanalanker wichtigen Eigenschaften wie Torsions- und Biegeresistenz und somit auch Bruchfestigkeit bei den vorbekannten Ankern zu wünschen übrig lassen und es ist davon ausgehend Aufgabe der vorliegenden Erfindung ein Verankerungselement anzugeben, das eine erhöhte Biege- und Torsionsfestigkeit und somit eine erhöhte Bruchfestigkeit aufweist. Diese Aufgabe wird mit einem Verankerungselement gemäss Patentanspruch 1 gelöst.

Die Erfindung wird in der folgenden Beschreibung näher erläutert. Da es sich gezeigt hat, dass die guten Torsionsund Biegeeigenschaften unabhängig von der Form und Dimension der Verankerungselemente sind, wird ganz allgemein ein Verankerungselement wie Zahnwurzelkanalanker oder Wurzelstift beschrieben. Dieses besteht bekanntlich, siehe beispielsweise die bereits zitierten Dokumente oder EP-A-522 221, aus einem Verankerungsteil und einem Kopf, wobei das Verankerungsteil je nach Art des Ankers ein Schraubengewinde oder Rippen oder dergleichen aufweisen kann und der Kopf verschiedene an sich bekannte Formen wie Adhäsionskopf, Retentionskopf oder Flachkopf aufweist, um den Aufbau aufzunehmen.

Bei den vorbekannten Verankerungselementen sind die Fasern, Kohlestoffasern oder Glasfasern, in der Regel in der Längsachse des Stiftes ausgerichtet. Zwecks Erhöhung des Widerstandes gegenüber Verbiegungs- und Torsionskräften und zwecks Erhöhung der axialen Biegsamkeit, wodurch sich eine wesentlich höhere Bruchfestigkeit ergibt, werden die Fasern nicht mehr axial ausgerichtet, sondern bi- oder multiaxial. Die Fasern werden in dieser bi- oder multiaxialen Form geflochten, bevorzugt in Zopfform. Bei der Verwendung von Kohlestoffasern werden beispielsweise 6 Bündel mit je 6'000 Fasern oder 12 Bündel mit je 3'000 Kohlestoffasern verwendet, wodurch sich der - gleiche - Anteil an Kohlestoffasern von ungefähr 65 % ergibt. Bevorzugte Kohlestoffasern sind hochfeste Fasern, die unter der Bezeichnung HT oder HTA bekannt sind.

Als Einbettmasse kann beispielsweise ein Epoxidharz verwendet werden. Mit Vorteil sind dabei Epoxidharze zu verwenden, die mit dem Zement und/oder dem Material des Zahnaufbaus eine chemische Bindung eingehen können.

Die Erfindung ist nicht auf diese spezielle Art von Kohlestoffasern beschränkt, andere geeignete Fasern mit hoher Festigkeit können ebenfalls verwendet werden und die Anzahl Bündel, bzw. Fasern pro Bündel, kann ebenfalls variiert werden. Zwecks Erreichen einer hohen Bruchfestigkeit ist es, abgesehen von der Anordnung der Fasern in einem Zopfgeflecht, wichtig, dass ein möglichst hoher Faseranteil erreicht wird, der zwischen 60 und 70 % liegt.

Anstelle von Kohlestoffasern ist es auch möglich, Glas- oder Quarzfasern zu verwenden. Ausserdem ist die Erfindung nicht auf die Verwendung von Epoxidharz beschränkt, sondern andere, an sich bekannte Einbett-Kunststoffe sind ebenfalls verwendbar. Die genaue Form des Zopfgeflechtes ist weniger wichtig als der Umstand, dass es sich um ein bi- oder multiaxiales Geflecht handelt, so dass nicht nur eine hohe Bruchfestigkeit gewährleistet ist, sondern auch eine grosse axiale Biegsamkeit, die notwendig ist, um schädliche Spannungen oder Verspannungen zu absorbieren, die im Zahn und Zahnaufbau bei Kaubewegungen vorkommen.

Bei der Verwendung von Trimmern, Vortrimmern, Erweiterern oder dergleichen Hilfsinstrumente mit den gleichen Dimensionen und Formen wie die Zahnwurzelkanalanker oder Wurzelstifte kann eine hohe Übereinstimmung zwischen dem Bohrloch und dem einzusetzenden Stift erreicht werden, wodurch die einwandfreie Verankerung besser gewährleistet ist. Wie bereits eingangs erwähnt, können alle an sich bekannten Ausführungsarten von Zahnwurzelkanalankern und Wurzelstiften aus dem oben beschriebenen faserverstärkten Kunststoff hergestellt werden, wobei zu den bekannten Vorteilen der Verwendung von nichtmetallischen Stiften neu hinzukommt, dass die Stifte und Zahnwurzelkanalanker eine höhere Bruchfestigkeit und eine grössere Elastizität aufweisen, die eine möglichst lange Lebensdauer bieten.

## Patentansprüche

1. Verankerungselement für einen Zahnaufbau, das aus faserverstärktem Kunststoff besteht, wobei die Fasern in einem zopfförmigen Geflecht angeordnet sind und die Fasern bi- oder multiaxial gerichtet sind, **dadurch gekennzeichnet, dass** die Fasern bei einer Gesamtzahl von 36'000 Fasern, in 6 - 12 Bündeln zu je 6'000 bis 3'000 Fasern zu einem Zopfgeflecht geflochten sind.

2. Verankerungselement nach Anspruch 1, **dadurch gekennzeichnet, dass** die Fasern mit einem Anteil von 60% bis 70% in einem Epoxidharz eingebettet sind.

3. Verankerungselement nach Anspruch 1 oder 2, **dadurch gekennzeichnet, dass** die Fasern Kohlestoffasern, Glasfasern oder Quarzfasern sind.

4. Verankerungselement nach Anspruch 3, **dadurch gekennzeichnet, dass** die Kohlestoffasern hochfeste Fasern des Typs HT oder HTA sind.

## Revendications

1. Elément d'ancrage pour une superstructure dentaire, constitué d'une matière synthétique renforcée de fibres, les fibres étant arrangées à la manière d'un tissu en forme de tresse et présentant une orientation bi- ou multiaxiale, **caractérisé en ce que** pour un nombre total de 36000 fibres, les fibres sont tissées à la manière d'une tresse en 6 à 12 faisceaux de 6000 à 3000 fibres chacun.

2. Elément d'ancrage selon la revendication 1, **caractérisé en ce que** les fibres sont encastrées dans une résine époxy à une proportion de 60% à 70%.

3. Elément d'ancrage selon l'une des revendications 1 ou 2, **caractérisé en ce que** les fibres sont des fibres de carbone, de verre ou de quartz.

4. Elément d'ancrage selon la revendication 3, **caractérisé en ce que** les fibres de carbone sont des fibres à haute résistance du type HT ou HTA.

## Claims

1. Anchorage element for a tooth superstructure, the anchorage element consisting of a fiber-reinforced synthetic material and the fibers being arranged in the manner of a braided netting in a biaxial or multiaxial orientation, **characterised in that** for a total number of 36,000 fibers, the fibers are braided in 6 to 12 strands of 6,000 to 3,000 fibers each.

2. Anchorage element according to claim 1, **characterised in that** the fibers are embedded in an epoxy resin at a proportion of 60% to 70%.

3. Anchorage element according to claim 1 or 2, **characterised in that** the fibers are carbon fibers, glass fibers, or quartz fibers.

4. Anchorage element according to claim 3, **characterised in that** the carbon fibers are high-strength fibers of the HT or HTA type.
